**Europäisches Patentamt**

**(19) European Patent Office**

**Office européen des brevets**

(11) Publication number: **0 050 978**
**B1**

(12) **EUROPEAN PATENT SPECIFICATION**

(45) Date of publication of patent specification: **21.01.87**

(51) Int. Cl.⁴: **G 05 D 23/24**

(21) Application number: **81305030.9**

(22) Date of filing: **26.10.81**

(54) Improvements relating to heat use control systems.

(30) Priority: **28.10.80 GB 8034672**

(43) Date of publication of application:
**05.05.82 Bulletin 82/18**

(45) Publication of the grant of the patent:
**21.01.87 Bulletin 87/04**

(84) Designated Contracting States:
**AT BE CH DE FR GB IT LI LU NL SE**

(56) References cited:
**BE-A- 841 601**
**DE-A-2 819 032**
**FR-A-2 414 162**
**GB-A-1 155 432**
**GB-A-2 040 080**
**US-A-4 021 615**
**US-A-4 090 248**
**US-A-4 217 646**

(73) Proprietor: **Microtec Systems Limited**
**Ramsbury House High Street**
**Hungerford, Berkshire RG17 0LY (GB)**

(72) Inventor: **Mayo, Sean Alfred**
**20 Orchard Rise**
**Tibberton Gloucestershire (GB)**
Inventor: **Sigournay, Norman Lomas**
**7 Piccadilly Way Prestbury**
**Cheltenham Gloucestershire (GB)**
Inventor: **Baxter, Geoffrey Thomas**
**20 Sinclair Road Shurdington**
**Cheltenham Gloucestershire (GB)**

(74) Representative: **James, Michael John Gwynne**
**et al**
**Wynne-Jones, Lainé & James 22, Rodney Road**
**Cheltenham Gloucestershire GL50 1JJ (GB)**

Courier Press, Leamington Spa, England.

## Description

This invention relates to control systems which will determine the state of a series of individual heat control devices associated, for example, with a central heating system or air conditioning units distributed throughout rooms or spaces in hotels or other buildings. Thus in a hotel provided with a central heating and/or air conditioning system, quite often each space has its own control unit which can be used either to turn a system on or off or possibly to vary the rate at which it operates. It is also possible to have a system wherein each space is provided with a temperature detector and a heat control device connected, all of which are connected to a main control unit which determines the operating conditions for each space and constantly monitors the conditions in each space and causes modification of the operating state of the control device as necessary to maintain optimum conditions in the relevant space. Such a system is described in Belgian Patent Specification BE—A—841 601.

It is an object of this invention to provide a control system which can be monitored and acted on from a remote main control unit.

Accordingly, this invention provides a control system comprising a main control unit, a series of individual heat control devices, temperature detectors associated with each control device, a coded addressing device associated with each pair of control devices and temperature detectors, common electrically conductive connections from the main control unit to the coded addressing devices associated with each pair of heat control devices and temperature detectors, the electrically conductive connections being selected from telephone or intercom wiring, a multiplexed highway and mains supply wiring linked to the coded addressing devices associated with each heat control device and temperature detector pair, means for sending an interrogation pulse from the main control unit to any individual temperature detector through its respective coded addressing device, a comparison device for comparing the response to the interrogation with a predetermined value or range of values, and means for sending an operating signal from the main control unit to the related heat control device through its respective coded addressing device when the response indicates a value outside said predetermined value or range of values, characterised by modifying means positioned in the region associated with each temperature detector and heat control device pair, each modifying means connected to the main control unit to enable said predetermined value or range of values for the associated temperature detector to be modified. A building with a large number of rooms will normally have an existing telephone or intercom wiring arrangement which will provide individual connections to each room. In this case the heat control device and temperature detectors may be interconnected with the telephone or intercom device present in a room.

Where individual wiring to each room is not available then the mains supply wiring could be used at extra expense such as the provision of a coded addressing system for each room. The modifying means will operate to produce a command signal for the main control unit, generated from the region where the particular temperature detector and associated heat control device is positioned. If the control system is linked, for example, to telephone wiring, the main control unit could be made responsive to a coded command dialled on the telephone instrument indicating that some modification is required and the extent of the desired modification.

In the preferred arrangement the temperature detector is a thermistor. The heat control device could be an operating switch for an individual heater or air conditioner. More usually it will be a valve in a hot water, steam or hot air supply pipe. In this case the valve will preferably be movable between the two positions for on and off although, for certain uses, it may be desirable to provide for movement of the valve into predetermined intermediate positions. Thus the valve may carry a magnetic member and coils outside the valve to be energised to move the valve between its two positions. The number of coils may be minimised by arranging that the valve coils provide a stepping device which will move the valve sequentially between its two positions at each energisation of the coil. Thus the valve could incorporate a spring and detent mechanism for biasing the valve positively into one of its two positions. Ideally there will also be a position indicator for indicating the operational state of the valve.

It is preferred that the main control unit should incorporate means for calculating the heat output of each heat control device. This enables a check to be made on the heat input to each area where a heat control device is provided and the system could incorporate a warning device for indicating an abnormal heat input. It is also preferred that the main control unit should have one or more inputs connected to detectors for indicating external temperature, wind strength and direction, or the total power output of a main heat producer or a main air conditioning unit. The main control unit could then determine any increase in output whch may be required generally or in a particular part of a building which may be more exposed to inclement conditions. Furthermore, the power output of each heat control device can be compared with the total power output from the main heat producer or a main air conditioning unit to check for unexpected power losses.

The invention may be performed in various ways and a preferred embodiment thereof will now be described with reference to the accompanying drawings, in which:—

Figure 1 is a block circuit diagram of a general control system of this invention;

Figure 2 shows a circuit for monitoring the temperature of a space and for operating a heat control device within that space;

Figure 3 illustrates a valve to be operated by the circuit of Figure 2;

Figure 4 is a flow diagram for the monitoring and controlling of the spaces connected to the control system;

Figure 5 is a flow diagram for determining the heat consumption of each space in the control system;

Figure 6 illustrates an alternative form of valve for the system; and

Figure 7 is a flow diagram for the general operation of the control system.

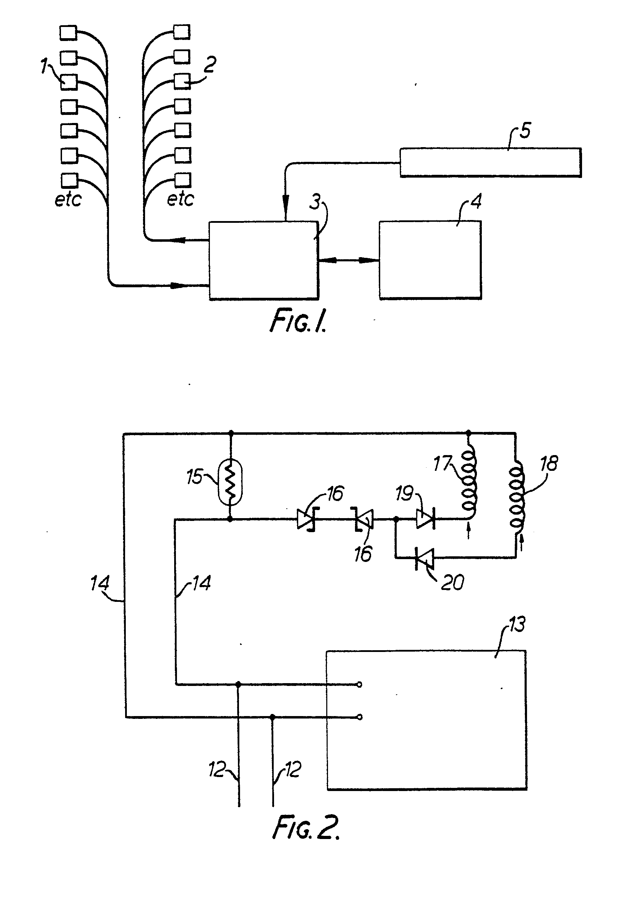

The control system described in connection with the drawings is generally suited for installation in large public buildings including offices, hotels, Universities and schools. The system, as generally illustrated in Figure 1, requires a sensor 1 and a heat controller 2 for each space and a control centre incorporating a main control unit in the form of a processor and memory unit 3 and an operator and keyboard display unit 4, from which all spaces can be controlled and at which any information on space heating can be monitored and displayed. In the present example the sensors 1 and controllers 2 are linked with the main control unit through the wiring of an existing telephone system. An outside temperature monitor 5 will also be linked to the processor unit 3. The display unit will display continuously the outside air temperature, the temperature of any space and heat consumption for any predetermined short period of any space as a ratio of the heating "on" time to the total time and average temperature. Heat consumption over the previous 12 hours for any space can also be displayed in a similar way.

Inputs to the processor and memory unit 3 will include the requirements for the temperature of a space (there may be a zero heating requirement for any space unoccupied) and a warning level set for the heat consumption for any space. This will enable a check to be made for excessive consumption if a window was left open or an indication of small heat consumption might suggest a system or component malfunction. It is desirable to be able to modify the space temperature requirement for any particular space where the occupant requires a higher or lower room temperature. This can be done by dialling a special code on the telephone instrument (this code can be shown prominently on the telephone). Thus the occupant could dial three digits, the first two giving access to the system and the last one requesting more or less heat, for example in temperature increments of 2°C subject to a predetermined maximum.

The advantages of the system include the features that heating is only provided when and where needed; the occupants have control over the temperature of the space they occupy up to a set maximum; and heat consumption is monitored so that abnormal high or low consumption will produce a warning signal (such as a flashing light) on the display unit 4. It would also be possible to monitor the total heat supplied by a main central heating boiler and compare this with the total heat consumption of all the heat control devices 2.

In a typical central heating system using hot water radiators, the pulse controller valve is connected in the radiator feed pipe either to replace the normal valve or to be in series with it.

Each sensor 1 and heat control device 2 can readily be incorporated in a fairly simple circuit as illustrated in Figure 2. Supply lines 12 to an individual telephone instrument 13 in a space to be heated are tapped by connections 14 incorporating the circuit. This circuit includes a thermistor 15 whose resistance will vary from a nominal 4.7 ohms at 25°C by 150 to 250 ohms per °C. An interrogation current pulse can be sent through the lines 14 to the thermistor 15 and a measurement of the voltage will give a direct indication of the temperature in the region surrounding the thermistor 15. Zener diodes 16 will provide a 15 volt threshold. The circuit also includes coils 17 and 18 each with a respective diode 19 or 20. These coils will control operation of a valve. Thus when an operating pulse which can overcome the threshold voltage of the Zener diodes 16 is passed through the lines 14 in one direction, the coil 17 will be energised whilst a pulse of opposite polarity will cause energisation of the coil 18.

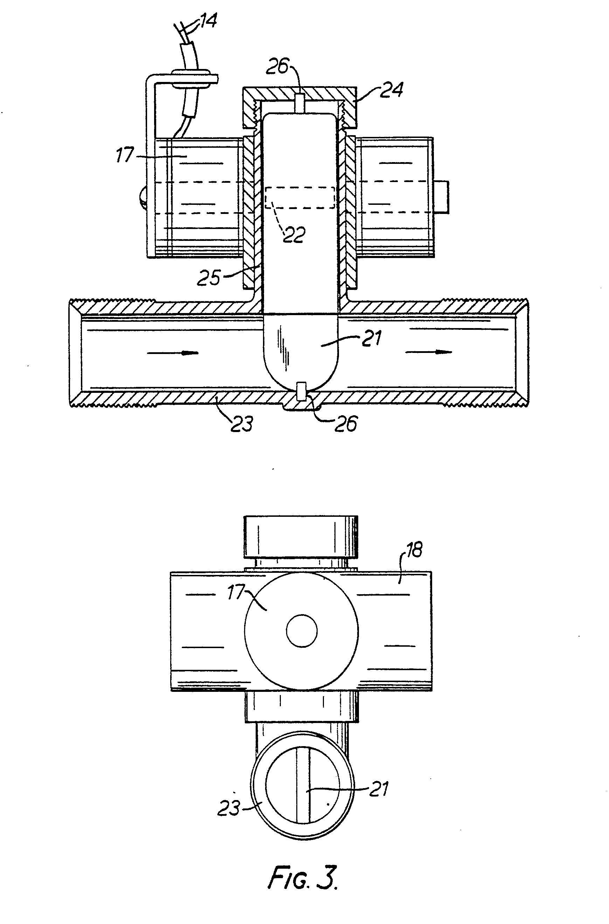

The coils 17 and 18 are illustrated in the device shown in Figure 3. This valve incorporates a rotatable paddle 21 having a magnet 22 moulded therein. One end of the paddle is positioned within a pipe 23 of the central heating circuit whilst the other end is held by a cap 24 screwed onto the end of a T-piece 25. The pipe 23 and cap 24 provide bearings 26 for the paddle. Each pair of coils 17 or 18 incorporates a soft iron core 27 and whenone pair of coils is energised the paddle will be driven either into the open condition allowing liquid to flow along the pipe 23 or a closed position wherein the paddle blocks off this pipe. Once operated the valve will remain in position due to the permanent magnet 22 buried in the paddle 21. It would be possible to extend the number of control positions by the addition of further coils around the circumferences. It would also be possible to provide a spring and detent mechanism which would prise the paddle into one of its two positions once it is turned by operating a single coil. This would remove the need for two sets of coils and the need to provide a responsive signal and the magnet 22 could be replaced by a piece of iron.

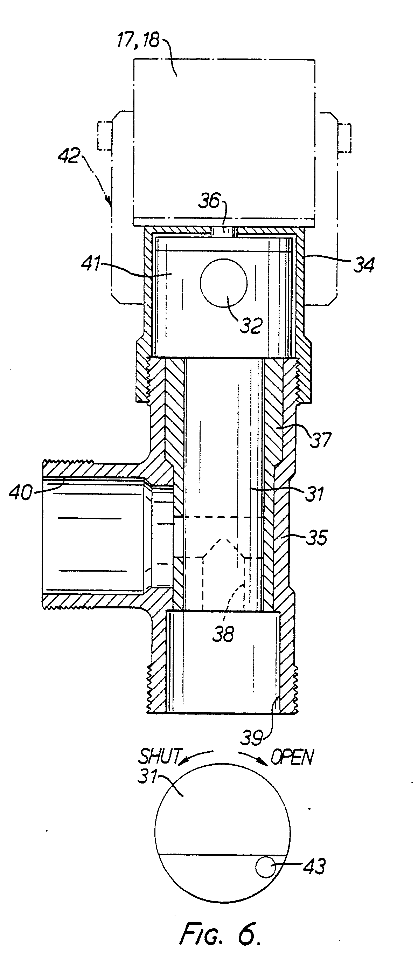

The alternative type of valve illustrated in Figure 6 has a ported plug 31 instead of the paddle 21 of the device of Figure 3. This plug 31 (formed from polytetrafluorethylene) is set in a brass sleeve 37 in one arm of a T-piece 35 and has an L-shaped port 38 to allow flow from an inlet 39 to an outlet 40 of the T-piece. A rare earth or ceramic magnet 32 is fitted in the head 41 of the plug 31 and a brass end cap 34 seals the plug within the T-piece 35 and provides a bearing for a polytetrafluoroethylene pivot 36. The valve is operated by an electromagnet 42 provided with the oppositely wound coils 17, 18 for switching the plug 31 between the on and off positions. The electromagnet 42 is offset by 20° from the on and off positions of the plug 31 whose rotation is limited to an angle of 90° by a stop 43. If desired, the plug 31 could be set in the T-piece in the same attitude as for the paddle 21 of the valve of Figure 3, the plug 31 then having a straight-through port 38. Holes may be drilled through the plug body from the port 38 to communicate with the top and bottom surfaces of the head 41 of the plug 31 so as to allow for pressure equilisation on the plug 31 and reduce the torque required to move the valve.

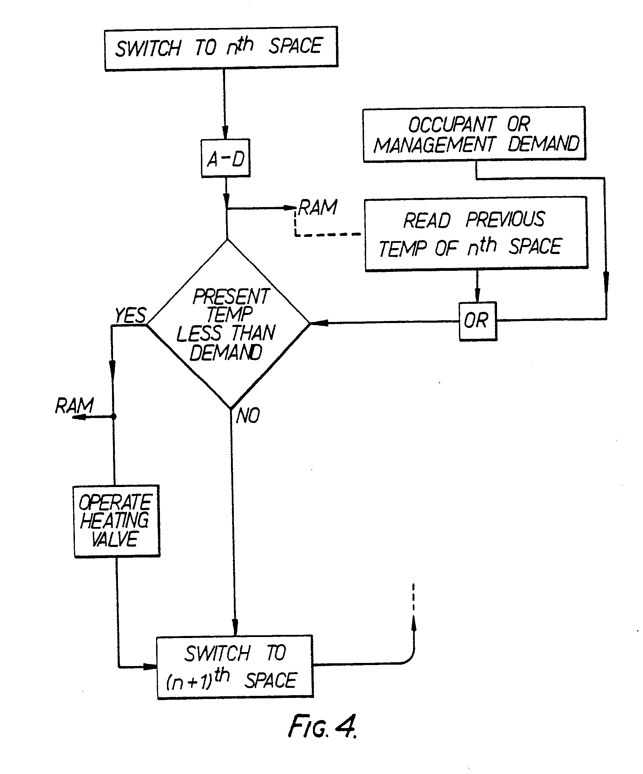

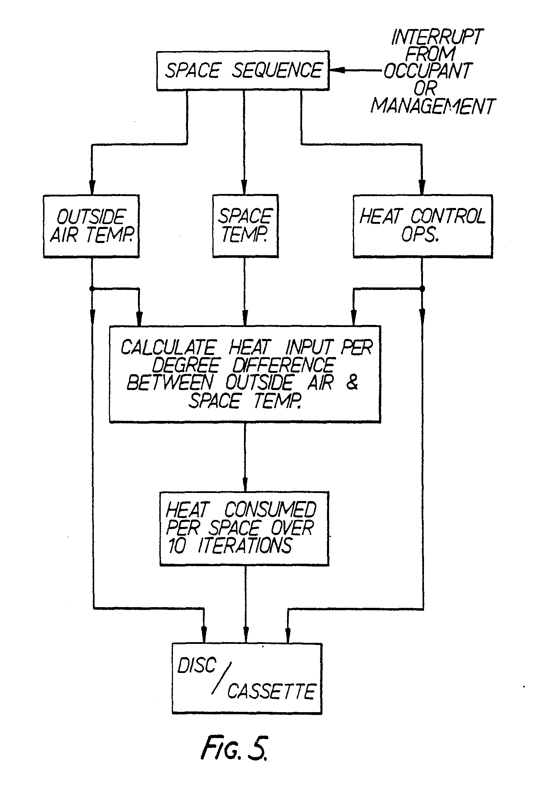

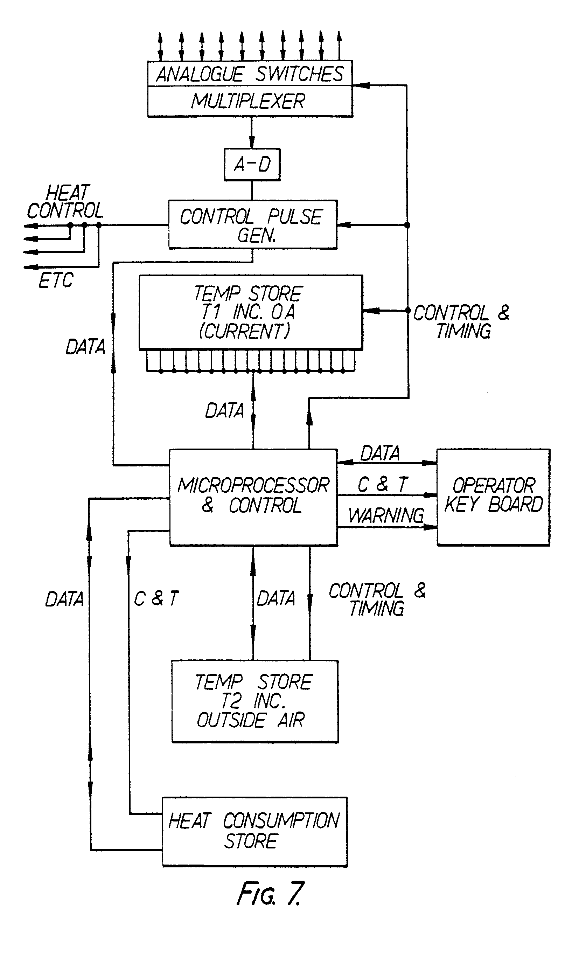

Features of the operation of the system illustrated in Figure 1 are given by way of flow diagrams in Figures 4, 5 and 7.

A typical system in a hotel would operate on the following lines.

The manager or receptionist tells the control unit at what particular time the room is to be occupied and the temperature to which it should be heated. The system has previously learnt the thermal profile of that particular room and knows that for a given outside temperature, and a required inside temperature, a certain time will elapse before the room will reach the temperature required. It therefore calculates the time at which the heating input to the room should be increased. When this time is arrived at, the normal controlling sequence will be initiated for that particular room automatically.

The control unit sequentially checks the temperature of each room and makes the decision to increase or reduce the heat input to the room. A pulse is then sent to the heat control valve concerned to open or close it. The information regarding the amount of heat that is being put into a particular room is stored in long-term memory and compared against a known profile of energy use for given outside temperature conditions. If the heat energy that is requested, and provided, is above the normal, then a warning is given to the manager or the receptionist, as it is likely that a window or door has been left open inadvertently. If the amount is lower than normal then the receptionist, (and possibly the maintenance section), is alerted to a probable malfunction of the valve, the heating system, or the control equipment.

At the beginning of each heating control sequence a fire detection programme sequence is initiated. This programme checks the temperature of each room and detects whether an abnormal change in temperature has occurred. The difference between this detection and normal fire detection (or smoke detection) methods, is that the conventional type of alarm only detects a rise in temperature above pre-set limits, and very often false alarms are caused. The technique used here is much more exact. The system knows how much heat has been put into the room as well as the outside temperature and the temperature around the room. If the temperature has risen inside the room but this has not been caused by corresponding input of heat by the system, then a warning is given. As the level of the temperature before an alarm is requested can be determined by software instructions, full account can be taken of that particular room's thermal profile for all normal conditions. Also because the temperature rise can be picked up at a very early stage of a fire (even before combustion has occurred) the warning can be given discretely because of the vast increase in the amount of time available to take emergency action. The system, therefore, is not only self-checking but prevents needless disruption due to malfunction and false alarm. Because of the increased time given for action, the cause of the fire can be pinpointed with extreme accuracy obviating the need for early general alarm and subsequent possible panic. It is inevitable therefore that many lives that will otherwise be lost can be saved without the nuisance value of 'trigger happy' alarm systems.

When the room is left the system can be put back into its quiescent state either by the receptionist or by a system linked with the key check procedure in the case of hotels or by a 'system cancel' code on the telephone.

Whilst in occupancy, the user of a room can interrupt the normal programme at any time by dialling a pre-set number on the telephone and either dialling a pre-set temperature or a rise in temperature, i.e. plus 2 degrees or 73 degrees F or 22 degrees C. A more expensive option is also the use of voice recognition in the system so that the user can actually communicate simply by speech.

The noticeable difference between hot and cold to the average human is 10°F but the degree of comfort or discomfort felt by an individual can vary considerably inside this range. Generally speaking most hotels will overheat rather than underheat. In many cases room users cannot alter radiator settings at all.

Predictive maintenance is also within the grasp of even the smallest hotels. The system will check over a period set by the user, how much heat is being used. This can be compared with the normal, and also with the fuel input to the heating system. A 'building efficiency' figure can thus be obtained for the complete building or parts of it. The intelligence of the unit will enable it to predict where and when a malfunction will occur next. This is particularly valuable with respect to the central heat generation in the boiler or heat pump, etc. but it also has value where, for instance, air-conditioning/cooling units that are independent to each room are used.

The system does not necessarily have to use an existing telephone network but can use a simple two line 'highway' which is distributed around the buildings. This can be as unobstructive as the small twin wires associated with telephone installations. In this case, however, the rooms need a decoder fitted together with the temperature sensor in order that control instructions for that room only are to obeyed. The same decoder will be needed if the mains wiring is used for communication.

It will be appreciated that the control system can

readily be used with a central heating based on ducted air or for controlling an air conditioning system.

The benefits of the control system described herein include the following.

There is comprehensive management control with substantial fuel savings easily obtainable. The system is intelligent and learns the response of the building, and each individual room, to variations in outside temperature.

Abnormalities and fire detection can be identified down to the individual room in a matter of seconds.

Temperature measurement and control can use existing telephone or mains systems wiring, keeping installation costs very low.

For hot water heating systems low power consumption, low water valve designs have been proved, giving complete control at low cost.

The system can be used for control of heating and cooling.

The system is self-monitoring for malfunction.

Heating plant maintenance requirements can be predicted in advance.

The control unit can be interfaced with existing computing facilities to co-operate in conjunction with billing systems and room status systems for housekeeping departments.

The room occupant has direct control over the temperature in that room, although the building manager has ultimate control over the maximum and minimum settings.

The system can be extended to the heating plant control to improve the efficiency of boilers and heat exchangers, etc.

Expansion of the system is software dominated and therefore special requirements are easily accommodated.

Oral communication with the system will be possible for both the manager and the room occupant.

This is especially useful if the controller is situated in a busy reception area.

The system can have a peak demand calculation ability into its intelligence so that load shedding can be applied (dependant upon the type of energy used) to take advantage of preferential tariffs.

## Claims

1. A control system comprising a main control unit (3), a series of individual heat control devices (2), temperature detectors (1) associated with each control device, a coded addressing device associated with each pair of heat control devices and temperature detectors, common electrically conductive connections (12) from the main control unit to the coded addressing devices associated with each pair of the heat control devices and temperature detectors, the electrically conductive connections being selected from telephone or intercom wiring, a multiplexed highway and mains supply wiring linked to the coded addressing devices associated with each heat control device and temperature detector pair, means for sending an interrogation pulse from the main control unit to any individual detector (1) through its respective coded addressing device, a comparison device (3) for comparing response to the interrogation with a predetermined value or range of values, and means (3) for sending an operating signal from the main control unit to the related heat control device through its respective coded addressing device when the response indicates a value outside said predetermined value or range of values, characterised by modifying means (13) positioned in the region associated with each temperature detector (1) and heat control device (2) pair, each modifyng means being connected to the main control unit (3) to enable said predetermined value or range of values for the associated temperature detector to be modified.

2. A control system according to claim 1, further characterised by an input unit (4) for modifying instructions incorporated in the main control unit (3).

3. A control system according to claim 1 or claim 2, further characterised in that the main control unit (3) incorporates means for calculating the heat output of each heat control device.

4. A control system according to claim 3 further characterised in that the main control unit (3) is adapted to produce a warning signal for indicating an abnormal heat output.

5. A control system according to any one of claims 1 to 4, further characterised in that the main control unit (3) has one or more units connected to detectors (5) for indicating external temperature, wind strength and direction, or the total output of a main heat producer or a main air conditioning unit.

6. A control system according to claim 5, further characterised in that the control unit (3) is interconnected with an intelligence unit and display (4) for indicating operating conditions of parts or the whole of the system.

7. A control system according to any one of claims 1 to 6, further characterised in that at least one of the temperature detectors is a thermistor (15).

8. A control system according to any one of claims 1 to 7, further characterised in that the heat control device is an operating switch for an individual heater or air conditioner.

9. A control system according to any one of claims 1 to 7, further characterised in that the heat control device is control means (17, 18) from a valve in a hot water, steam or hot air supply pipe.

## Patentansprüche

1. Regelsystem mit einer Hauptregeleinheit (3), einer Mehrzahl von einzelnen Wärmeregelgeräten (2), denen jeweils ein Wärmefühler (1) zugeordnet ist, einer codierten Adreßeinrichtung für jedes Wärmeregelgerät und seinen Wärmefühler, gemeinsamen elektrischen Verbindungsleitungen (12) von der Hauptregeleinheit zu den codierten Adreßeinrichtungen für jedes Wärmeregelgerät und den zugehörigen Wärmefühler, wobei die Verbindungsleitungen von Leitungen von Telefon- oder Haussprechanlagen oder von Multiplex- oder Stromnetzleitungen gebildet sind, die mit den codierten Adreßeinrichtungen verknüpft sind, Mitteln zum Senden eines Abfrageimpulses von der Hauptregeleinheit zu jedem einzelnen Wärmefühler über dessen codierte Adreßeinrichtung, ein Vergleichsgerät (3) zum Vergleichen der Antwort auf die Abfrage mit einem vorbestimmten Wert oder Wertbereich, und Mitteln (3) zum Senden eines Betätigungssignals von der Hauptregeleinheit zu dem betreffenden Wärmeregelgerät über dessen codierte Adreßeinrichtung, wenn die Antwort einen Wert außerhalb des vorbestimmten Wertes oder Wertbereiches anzeigt, gekennzeichnet durch Modifikationsmittel (13), die in dem Bereich angeordnet sind, dem jeweils ein Wärmefühler (1) und das zugehörige Wärmeregelgerät (2) zugeordnet sind, wobei jedes Modifikationsmittel mit dem Hauptregelgerät (3) verbunden ist, um den vorbestimmten Wert oder Wertbereich für den zugehörigen Wärmefühler zu verändern.

2. Regelsystem nach Anspruch 1, gekennzeichnet durch eine Eingabeeinheit (4) zur Modifizierung von Instruktionen, die in der Hauptregeleinheit (3) enthalten sind.

3. Regeleinheit nach Anspruch 1 oder 2, dadurch gekennzeichnet, daß die Hauptregeleinheit (3) Mittel zum Berechnen der Wärmeleistung jedes Wärmeregelgerätes aufweist.

4. Regelsystem nach Anspruch 3, dadurch gekennzeichnet, daß die Hauptregeleinheit (3) so ausgebildet ist, daß sie ein Warnsignal zur Anzeige einer abnormalen Wärmeleistung erzeugt.

5. Regelsystem nach einem der Ansprüche 1 bis 4, dadurch gekennzeichnet, daß die Hauptregeleinheit (3) einen oder mehrere Eingänge aufweist, die mit Detektoren (5) zur Anzeige der Außentemperatur, Windstärke und -richtung oder der Gesamtleistungsabgabe eines Hauptwärmeerzeugers oder einer Hauptklimaanlage verbunden sind.

6. Regelsystem nach Anspruch 5, dadurch gekennzeichnet, daß die Hauptregeleinheit (3) mit einer Informations- und Displayeinheit (4) zur Anzeige der Betriebweise des ganzen Systems oder von Teilen desselben verbunden ist.

7. Regelsystem nach Ansprüche 1 bis 6, dadurch gekennzeichnet, daß mindestens einer der Wärmefühler ein Thermistor (15) ist.

8. Regelsystem nach einem der Ansprüche 1 bis 7, dadurch gekennzeichnet, daß das Wärmeregelgerät ein Betätigungsschalter für ein individuelles Heiz- oder Klimagerät ist.

9. Regelsystem nach einem der Ansprüche 1 bis 7, dadurch gekennzeichnet, daß das Wärmeregelgerät ein Steuergerät eines Ventils in einer Heißwasser-, Dampf- oder Heißluftleitung ist.

**Revendications**

1. Système de commande comprenant une unité de commande principale (3), une série d'organes de commande de chauffage individuels (2), des capteurs de température (1), combinés chacun à un organe de commande, un élément d'adressage codé coordonné à chaque couple constitué d'un organe de commande de chauffage et d'un capteur de température, des connexions électriques communes (12) reliant l'unité de commande principale aux éléments d'adressage codé coordonnés à chaque couple constitué d'un organe de commande de chauffage et d'un capteur de températeur, les connexions électriques étant formées par un câblage de téléphone ou d'interphone, un bus multiplexé ou un câblage d'alimentation électrique multiplexé, relié aux éléments d'adressage codé coordonnées à chaque couple constitué d'un organe de commande de chauffage et d'un capteur de température, un dispositif pour envoyer une impulsion d'interrogation de l'unité de commande principale à un capteur de température individuel (1) quelconque, à travers son élément d'adressage codé correspondant, un comparateur (3) pour comparer la réponse à l'interrogation avec une valeur prédéterminée ou une plage prédéterminée de valeurs, ainsi qu'un dispositif (3) pour envoyer un signal d'actionnement de l'unité de commande principale à l'organe concerné de commande de chauffage, à travers son élément d'adressage codé correspondant, lorsque la réponse indique une valeur qui diffère de la valeur prédéterminée ou est située en dehors de la plage prédéterminée de valeurs, caractérisé par des dispositifs de modification (13), placés dans la zone correspondant à chaque couple constitué d'un capteur de température (1) et d'un organe de commande de chauffage (2), chaque dispositif de modification étant connecté à l'unité de commande principale (3) pour permettre la modification de la valeur prédéterminée ou la plage prédéterminée de valeurs pour le capteur de température concerné.

2. Système de commande selon la revendication 1, caractérisé, en outre, par une unité d'entrée (4) pour modifier des instructions incorporées dans l'unité de commande principale (3).

3. Système de commande selon la revendication 1 ou 2, caractérisé, en outre, en ce que l'unité de commande principale (3) contient un dispositif pour calculer le débit de chaleur commandé par chaque organe de commande de chauffage.

4. Système de commande selon la revendication 3, caractérisé, en outre, en ce que l'unité de commande principale (3) est conçue pour produire un signal d'avertissement afin de signaler un débit de chaleur anormal.

5. Système de commande selon l'une quelconque des revendications 1 à 4, caractérisé, en outre, en ce que l'unité de commande principale (3) possède une ou plusieurs entrées connectées à des détecteurs (5) servant à indiquer la température extérieure, la force et la direction du vent ou l'energie totale délivrée par un générateur de chaleur principal ou par une unité principale de conditionnement d'air.

6. Système de commande selon la revendica-

tion 5, caractérisé, en outre, en ce que l'unité de commande (3) est interconnectée à une unité de contrôle et d'affichage (4) pour indiquer des conditions de fonctionnement de parties ou de l'ensemble du système.

7. Système de commande selon l'une quelconque des revendications 1 à 6, caractérisé, en outre, en ce que l'un au moins des capteurs de températeur est un thermistor (15).

8. Système de commande selon l'une quelconque des revendications 1 à 7, caractérisé, en outre, en ce que l'organe de commande de chauffage est un interrupteur de commande d'un appareil de chauffage ou de conditionnement d'air individuel.

9. Système de commande selon l'une quelconque des revendications 1 à 7, caractérisé en ce que l'organe de commande de chauffage est constitué par le dispositif de commande (17, 18) d'un soupape montée dans une canalisation d'alimentation en eau chaude, vapeur ou air chaud.

0  050  978

Fig. 1.

Fig. 2.

1

FIG. 3.

FIG. 4.

FIG. 5.

FIG. 6.

FIG. 7.